# EUROPEAN PATENT APPLICATION

(11) **EP 4 793 738 A1**
(43) Date of publication of application: **19.08.2026**
(21) Application number: 25732310.5
(22) Date of filing: 23.06.2025
(51) Int. Cl.: G06F 1/3234, G06F 1/3287, G06F 1/3231, G06F 3/048

(54) **ELECTRONIC DEVICE AND METHOD FOR CONTROLLING BRIGHTNESS OF DISPLAY, AND NON-TRANSITORY COMPUTER-READABLE STORAGE MEDIUM**

(30) Priority: 30.09.2024 KR 20240133398; 13.11.2024 KR 20240161505
(71) Applicant: Samsung Electronics Co., Ltd, Suwon-si, Gyeonggi-do 16677 (KR)
(72) Inventor: PARK, Taejin, Suwon-si, Gyeonggi-do 16677 (KR); OH, Hyewon, Suwon-si, Gyeonggi-do 16677 (KR); KIM, Dongin, Suwon-si, Gyeonggi-do 16677 (KR); KIM, Minho, Suwon-si, Gyeonggi-do 16677 (KR); NOH, Gilyoung, Suwon-si, Gyeonggi-do 16677 (KR)
(74) Representative: Appleyard Lees IP LLP
(86) International application number: PCT/KR2025/008712
(87) International publication number: WO 2026/071395

(57) **Abstract**

At least one processor of an electronic device is configured to, based on the number of one or more executions of an application and a total execution time of the application in a foreground state, identify a calculated execution time of the application, identify the number of one or more user inputs obtained while an execution screen of the application is displayed in a dim state, determine a screen off time interval for the application based on the calculated execution time of the application and the number of the one or more user inputs obtained while the execution screen of the application is displayed in the dim state, and perform an operation for reducing power consumption of the electronic device based on the screen off time interval while the application is executed in the foreground state after determining the screen off time interval.

## Description

### [Technical Field]

The following descriptions relate to an electronic device, a method, and a non-transitory computer readable storage medium for controlling brightness of a display.

### [Background Art]

An electronic device may reduce brightness of a screen displayed through a display in a case that a user input is not obtained for a specified time interval. Short time intervals force users to tap the screen repeatedly to keep the display active. This can result in a poor user experience. Conversely, long time intervals allow the screen to remain on longer than necessary which increases power consumption.

The above-described information may be provided as a related art for the purpose of helping understanding of the present disclosure. No argument or decision is made as to whether any of the above description may be applied as a prior art related to the present disclosure.

### [Disclosure]

### [Technical Solution]

An electronic device is provided. The electronic device may comprise a display. The electronic device may comprise memory, including one or more storage media, storing instructions. The electronic device may comprise at least one processor including processing circuitry. The instructions, when executed by the at least one processor individually or collectively, may cause the electronic device to, based on the number of one or more executions of an application and a total execution time of the application in a foreground state, identify a calculated execution time of the application. The instructions, when executed by the at least one processor individually or collectively, may cause the electronic device to identify the number of one or more user inputs obtained while an execution screen of the application is displayed in a dim state. The instructions, when executed by the at least one processor individually or collectively, may cause the electronic device to determine a screen off time interval for the application based on the calculated execution time of the application and the number of the one or more user inputs obtained while the execution screen of the application is displayed in the dim state. The instructions, when executed by the at least one processor individually or collectively, may cause the electronic device to perform an operation for reducing power consumption of the electronic device based on the screen off time interval while the application is executed in the foreground state after determining the screen off time interval.

A method performed by an electronic device comprising a display and at least one camera is provided. The method may comprise, based on the number of one or more executions of an application and a total execution time of the application in a foreground state, identifying a calculated execution time of the application. The method may comprise identifying the number of one or more user inputs obtained while an execution screen of the application is displayed in a dim state. The method may comprise determining a screen off time interval for the application based on the calculated execution time of the application and the number of the one or more user inputs obtained while the execution screen of the application is displayed in the dim state. The method may comprise performing an operation for reducing power consumption of the electronic device based on the screen off time interval while the application is executed in the foreground state after determining the screen off time interval.

A non-transitory computer readable storage medium storing one or more programs is provided. The one or more programs may comprise instructions which, when executed by at least one processor of an electronic device individually or collectively, cause the electronic device to, based on the number of one or more executions of an application and a total execution time of the application in a foreground state, identify a calculated execution time of the application. The one or more programs may comprise instructions which, when executed by at least one processor of an electronic device individually or collectively, cause the electronic device to identify the number of one or more user inputs obtained while an execution screen of the application is displayed in a dim state. The one or more programs may comprise instructions which, when executed by at least one processor of an electronic device individually or collectively, cause the electronic device to determine a screen off time interval for the application based on the calculated execution time of the application and the number of the one or more user inputs obtained while the execution screen of the application is displayed in the dim state. The one or more programs may comprise instructions which, when executed by at least one processor of an electronic device individually or collectively, cause the electronic device to perform an operation for reducing power consumption of the electronic device based on the screen off time interval while the application is executed in the foreground state after determining the screen off time interval.

### [Description of the Drawings]

With respect to a description of drawings, the same or similar reference numerals may be used for the same or similar components. The subject-matter of the present disclosure is best understood with reference to the accompanying Figures, in which:
FIG. 1 is a block diagram of an electronic device in a network environment according to various embodiments.
FIG. 2 illustrates a simplified block diagram of an electronic device.
FIGS. 3A and 3B illustrate examples of brightness of a screen in accordance with a state of a display.
FIGS. 4A and 4B illustrate examples of a configuration screen for a time interval associated with screen off.
FIG. 5 is a flowchart indicating operations of an electronic device for monitoring a foreground application.
FIG. 6 is a flowchart indicating operations of an electronic device for configuring a screen off time interval for an application in a foreground state.
FIG. 7 is a flowchart indicating operations of an electronic device for counting a user input for increasing brightness of a screen of a display.
FIG. 8 is a flowchart indicating operations of an electronic device to determine a screen off time interval.
FIG. 9 is a flowchart indicating operations of an electronic device for performing a low power operation based on a screen off time interval.
FIG. 10 exemplifies operations of an electronic device in accordance with a screen off time interval.
FIG. 11 is a flowchart indicating operations of an electronic device to determine a screen off time interval.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

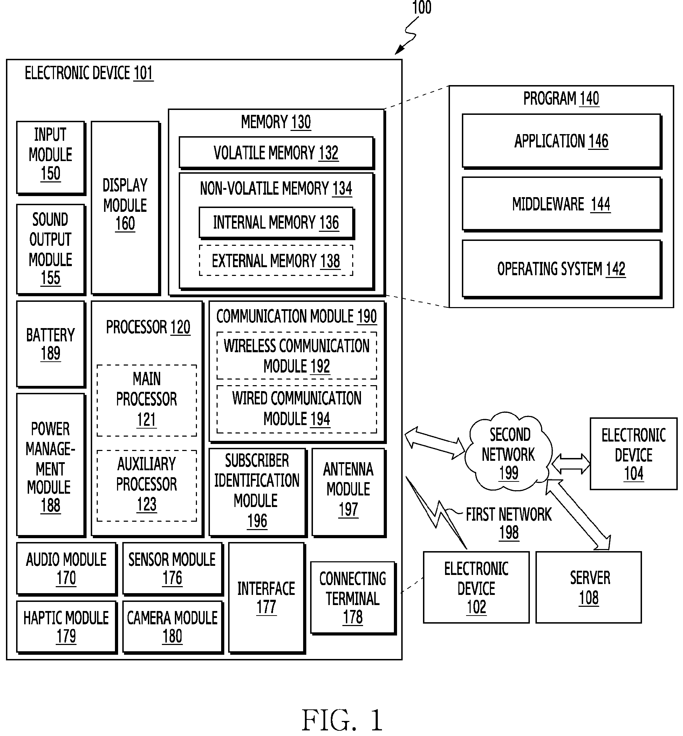

FIG. 1 is a block diagram of an electronic device in a network environment according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, and an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. The memory 130 may include an internal memory 136 and/or an external memory 138.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., via a wired connection) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., via a wired connection) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beamforming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performed function or performed service request, or the performed additional function or the performed additional service related to the request, to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

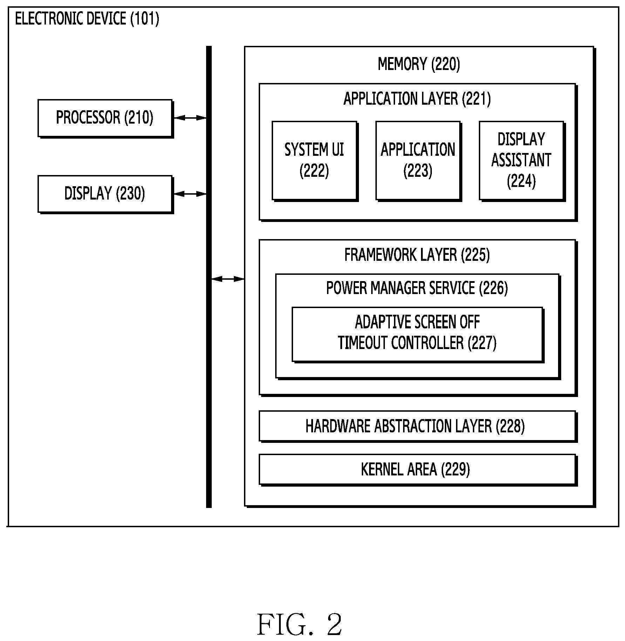

FIG. 2 illustrates a simplified block diagram of an electronic device. An electronic device 101 of FIG. 2 may correspond to the electronic device 101 of FIG. 1.

Referring to FIG. 2, the electronic device 101 may include a processor 210, memory 220, and a display 230. For example, the processor 210, the memory 220, and the display 230 may be electronically and/or operably coupled with each other by a communication bus. Hereinafter, hardware components being operably coupled may mean that a direct connection or an indirect connection between the hardware components is established wired or wirelessly so that a second hardware component (e.g., the memory 220 or the display 230) is controlled by a first hardware component (e.g., the processor 210) among the hardware components. The hardware components illustrated in FIG. 2 are illustrated based on different blocks, but the present disclosure is not limited thereto. For example, some of the hardware components (e.g., at least a portion of the processor 210, the memory 220, and/or the display 230) of the electronic device 101 illustrated in FIG. 2 may be included in a single integrated circuit such as a system on chip (SoC) or a system in package (SIP). A type and the number of hardware components included in the electronic device 101 are not limited as illustrated in FIG. 2. For example, the electronic device 101 may include only some of the hardware components illustrated in FIG. 2.

In an embodiment, the processor 210 of the electronic device 101 may include a hardware component for processing data based on one or more instructions. The hardware component for processing data may include, for example, an arithmetic and logic unit (ALU), a floating point unit (FPU), and a field programmable gate array (FPGA). As an example, the hardware component for processing data may include a central processing unit (CPU), a graphics processing unit (GPU), a digital signal processor (DSP), a microcontroller (MCU), and/or a neural processing unit (NPU). The number of processors 210 may be one or more. For example, the processor 210 may have a structure of a multi-core processor such as a dual core, a quad core, or a hexa core. The processor 210 of FIG. 2 may be applied in substantially the same detail as the processor 120 of FIG. 1.

In an embodiment, the processor 210 may include various processing circuitry and/or a plurality of processors. For example, a term "processor" used in this document, including scope of claims, may include various processing circuitry including at least one processor, and one or more of the at least one processor may be configured to perform various functions described below individually and/or collectively in a distributed manner. As used below, in a case that "processor", "at least one processor", and "one or more processors" are described as being configured to perform various functions, these terms encompass, for example and without limitation, situations in which one processor performs a portion of cited functions and other processor(s) perform another portion of the cited functions, and also situations in which one processor may perform all of the cited functions. Additionally, the at least one processor may include a combination of processors that perform various functions listed/disclosed, for example, in a distributed manner. The at least one processor may execute program instructions to accomplish or perform various functions.

In an embodiment, the memory 220 of the electronic device 101 may include a hardware component for storing data and/or instructions inputted to the processor 210 and/or outputted from the processor 210. For example, the memory 220 may include volatile memory, such as random-access memory (RAM), and/or non-volatile memory, such as read-only memory (ROM). The volatile memory may include at least one of, for example, dynamic RAM (DRAM), static RAM (SRAM), cache RAM, and pseudo SRAM (PSRAM). The non-volatile memory may include at least one of, for example, programmable ROM (PROM), erasable PROM (EPROM), electrically erasable PROM (EEPROM), flash memory, a hard disk, a compact disk, and an embedded multimedia card (eMMC).

In an embodiment, in the memory 220 of the electronic device 101, one or more instructions (or commands) indicating a calculation and/or an operation performed by the processor 210 of the electronic device 101 may be stored. A set of one or more instructions may be referred to as a program, firmware, an operating system, a process, a routine, a sub-routine, and/or an application. Hereinafter, being installed in the electronic device 101 may mean that one or more instructions provided in a form of an application are stored in the memory 220, and that one or more applications are stored in a format executable by the processor 210 of the electronic device 101. A specific detail of the memory 220 of FIG. 2 may be applied substantially the same as a detail of the memory 130 of FIG. 1.

Referring to FIG. 2, the memory 220 of the electronic device 101 may include an application layer 221, a framework layer 225, a hardware abstraction layer (HAL) 228, and a kernel area 229. For example, the application layer 221 may include a system UI 222, an application 223, and a display assistant 224. For example, the framework layer 225 may include a power manager service 226 including an adaptive screen off timeout controller 227. The layers of the memory 220 illustrated in different blocks in FIG. 2 may indicate a logically distinct state.

In an embodiment, the application layer 221 may comprise programs for a user to control the electronic device 101. For example, the application layer 221 may include the system user interface (UI) 222, the application 223, and the display assistant 224. However, the present disclosure is not limited thereto. For example, the application layer 221 may include only some of the system UI 222, the application 223, and the display assistant 224. For example, the application layer 221 may further include another application in addition to the application 223.

In an embodiment, an element (e.g., the system UI 222, the application 223, or the display assistant 224) of the application layer 221 may cause activation (or execution) of a function provided by the framework layer 225 by calling (or requesting) an application programming interface (API) of the framework layer 225.

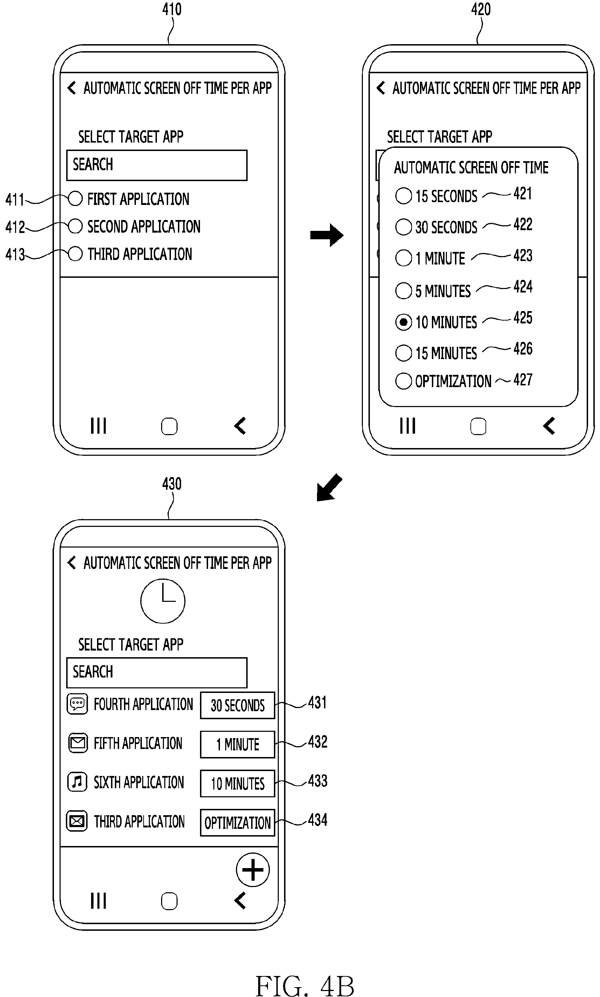

In an embodiment, the display assistant 224 of the application layer 221 may configure a screen off time interval (or screen off timeout) for each application by calling APIs of the framework layer 225. If no user input is received during the screen off time interval, the screen of the electronic device 101 may be automatically turned off.For example, the display assistant 224 may display a screen (e.g., a first screen 410 of FIG. 4B) for configuring the screen off time interval for each application through the display 230 by calling the API. The screen for configuring the screen off time interval for each application may display applications installed in the memory of the electronic device 101. By calling an API in accordance with a user input for one application among applications, the display assistant 224 may display a screen (e.g., a second screen 420 of FIG. 4B) displaying screen off time intervals that may be configured for the application through the display 230. The display assistant 224 may display a screen (e.g., a third screen 430 of FIG. 4B) displaying an application and a screen off time interval configured for the application through the display 230, by calling an API in accordance with a user input for one screen off time interval among screen off time intervals.

In an embodiment, the element (e.g., the system UI 222 or the application 223) of the application layer 221 may cause activation of a function (e.g., a process observer) for monitoring a foreground application by calling the API of the framework layer 225. For example, while the function is activated, a change in the foreground application may be identified. For example, whether an application corresponds to a foreground state may be identified in accordance with the function. In an example, the electronic device 101 may identify that the application is released from the foreground state in accordance with the function. In another example, the electronic device 101 may identiy that the application enters to the foreground state in accordance with the function.

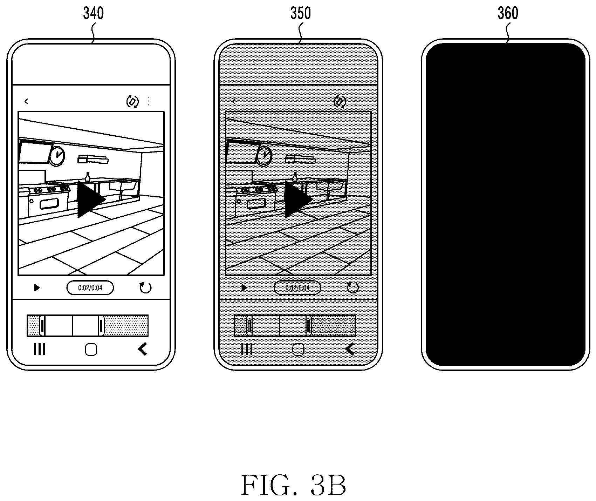

In an embodiment, the element (e.g., the system UI 222 or the application 223) of the application layer 221 may adaptively determine a screen off time interval by calling APIs of the adaptive screen off timeout controller 227. For example, the element may identify an execution time interval (or usage time) of an application in the foreground state by calling the API. For example, the element may identify an activation time interval of a function (e.g., a wake lock) that causes a screen of the application to be displayed at a default brightness during the execution time interval by calling the API. For example, the element may identify a usage time interval for the application excluding the activation time interval of the function from the execution time interval of the application by calling the API. For example, the element may identify an average usage time interval for the application based on the usage time interval by calling the API. For example, the element may identify a count value for which a user input is obtained while the screen for the application is displayed with a lower brightness (e.g., a second brightness 350 of FIG. 3B) than a default brightness (e.g., a first brightness 340 of FIG. 3B) by calling the API. For example, the element may identify a dim time interval for changing the screen of the application displayed based on low brightness to screen off by calling an API. For example, the element may determine a new screen off time interval based on the average usage time interval, the count value, and/or the dim time interval for the application by calling the API.

In an embodiment, the display 230 of the electronic device 101 may include a display panel, a touch sensor, and/or processing circuitry. For example, the display 230 may be used to display visual information (e.g., an image, a screen, an object, a visual object, a user interface (UI), and/or a graphical user interface (GUI)).

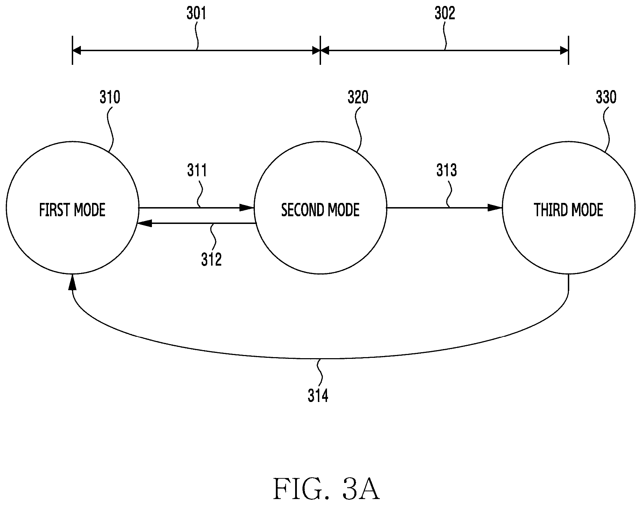

FIGS. 3A and 3B illustrate examples of brightness of a screen in accordance with a state of a display. In FIGS. 3A and 3B, in order to reduce power consumption of an electronic device 101, a low power operation for reducing brightness of a screen displayed through a display 230 is described.

Referring to FIGS. 3A and 3B, the display 230 of the electronic device 101 may operate based on one mode among a first mode 310, a second mode 320, and a third mode 330. The first mode 310 may mean an operation mode of the display 230 that displays the screen of the display 230 with a first brightness (or a default brightness) 340. In an example, the first mode 310 may be referred to as a screen bright. The second mode 320 may mean an operation mode of the display 230 that displays the screen of the display 230 with a second brightness 350 lower than the first brightness 340. In an example, the second mode 320 may be referred to as a screen dim. The third mode 330 may mean turn-off 360 of the screen of the display 230. In an example, the third mode 330 may be referred to as screen off or an idle mode.

For example, the electronic device 101 may identify a screen off time interval for an application in response to a transition of the application to a foreground state. The foreground state may mean a state in which a user interface (UI) for an application is displayed through the screen of the display 230. For example, the electronic device 101 may identify configuration information for the screen off time interval. The electronic device 101 may identify whether the screen off time interval configured for the application transitioned to the foreground state exists based on the configuration information for the screen off time interval. For example, the electronic device 101 may identify a corresponding time interval as the screen off time interval in accordance with an identification that the screen off time interval configured for the application exists. For example, the electronic device 101 may identify a time interval (e.g., 30 seconds) configured as a default value in a system as the screen off time interval in accordance with an identification that the screen off time interval configured for the application does not exist. For example, the electronic device 101 may identify a first time interval 301 and a second time interval 302 based on the screen off time interval for the application. The screen off time interval may be equivalent to the sum of the first time interval 301 and the second time interval 302. The first time interval 301 may correspond to a time interval for changing brightness of a screen for an application from the first brightness 340 to the second brightness 350. In the first time interval 301, the screen for the application may be displayed with the first brightness 340. The first time interval 301 may be the time interval where the screen is displayed at a first brightness 340 before changing to a second brightness 350. In an example, the first time interval 301 may be referred to as a bright time interval or a default time interval. The second time interval 302 may correspond to a time interval for screen off a screen of an application displayed with the second brightness 350. In the second time interval 302, the screen for the application may be displayed based on the second brightness 350. The second time interval 302 may be the time interval where the screen is displayed at a second brightness 350 before screen off. In an example, the second time interval 302 may be referred to as a dim time interval. In an example, the first time interval 301 may correspond to 67 percent (%) of the screen off time interval, and the second time interval 302 may correspond to 33 percent (%) of the screen off time interval. However, this is only an example, and the present disclosure is not limited thereto.

For example, the first time interval 301 and the second time interval 302 may be determined based on the screen off time interval. The first time interval 301 and/or the second time interval 302 may be determined based on a ratio to the screen off time interval. In an example, the first time interval 301 may correspond to 67 percent (%) of the screen off time interval, and the second time interval 302 may correspond to 33 percent (%) of the screen off time interval. However, this is only an example, and the present disclosure is not limited thereto. For example, the first time interval 301 and/or the second time interval 302 may be configured to a specific time interval (e.g., 5 seconds).

For example, the first time interval 301 and/or the second time interval 302 may be determined during development of an application. The electronic device 101 may obtain information on an application from an external server through communication circuitry (not illustrated). The information on the application may include information on the first time interval 301 and/or the second time interval 302. The electronic device 101 may identify the first time interval 301 and/or the second time interval 302 based on the information.

For example, the electronic device 101 may display the screen of the display 230 based on the first brightness 340 in response to the transition of the application to the foreground state. The electronic device 101 may start a timer based on displaying the screen of the display 230 based on the first brightness 340. The electronic device 101 may identify whether a user input is obtained during the first time interval 301. For example, the electronic device 101 may perform mode transition 311 in accordance with an identification that the user input is not obtained during the first time interval 301. The electronic device may change the brightness of the screen of the display 230 from the first brightness 340 to the second brightness 350 in accordance with the mode transition 311. In another example, the electronic device 101 may restart (or reset) the timer according to the mode transition 303 in accordance with an identification that a user input is obtained during the first time interval.

For example, the electronic device 101 may display the screen of the display 230 based on the second brightness 350 in accordance with the identification that the user input is not obtained during the first time interval 301. The electronic device 101 may identify whether a user input is obtained during the second time interval 302. For example, in a case that the user input is not obtained in the second time interval 302, the timer may expire. The electronic device 101 may identify that the user input is not obtained during the second time interval 302, based on the expiration of the timer. The electronic device 101 may perform a mode transition 313 in accordance with an identification that the user input is not obtained during the second time interval 302. The mode transition 313 may cause the turn-off 360 of the screen of the display 230. In another example, the electronic device 101 may perform a mode transition 312 in accordance with an identification that the user input is obtained during the second time interval 302. The electronic device 101 may change the brightness of the screen of the display 230 from the second brightness 350 to the first brightness 340 and restart (or reset) the timer according to the mode transition 312.

For example, the electronic device 101 may perform a mode transition 314 based on obtaining the user input while the screen of the display 230 is turned off 360. The electronic device may display the screen based on the first brightness 340 and start the timer.

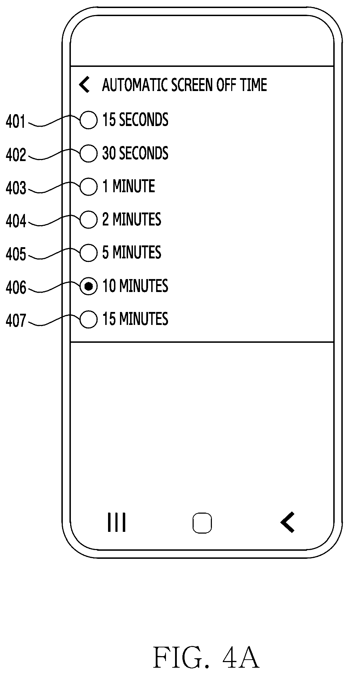

FIGS. 4A and 4B illustrate examples of a configuration screen for a time interval associated with screen off. In FIGS. 4A and 4B, an example of configuring a time interval associated with screen off for applications or each of the applications is described.

Referring to FIG. 4A, an electronic device 101 may display time intervals associated with screen off through a screen of a display 230. For example, the electronic device 101 may display an object 401 for a first time interval (e.g., 15 seconds), an object 402 for a second time interval (e.g., 30 seconds), an object 403 for a third time interval (e.g., 1 minute), an object 404 for a fourth time interval (e.g., 2 minutes), an object 405 for a fifth time interval (e.g., 5 minutes), an object 406 for a sixth time interval (e.g., 10 minutes), and an object 407 for a seventh time interval (e.g., 15 minutes) on the screen of display 230. However, this is only an example, and the present disclosure is not limited thereto. For example, the electronic device 101 may display only some of the objects through the screen of the display 230. The electronic device 101 may obtain a user input (e.g., a touch input) for one of the objects. The electronic device 101 may determine (or configure) a time interval corresponding to an object from which a user input is obtained as a screen off time interval for applications. For example, a screen off time interval may be applied to applications except for an application in which the screen off time interval is individually configured in accordance with FIG. 4B.

As described in FIG. 4A, a screen off time interval may be commonly configured for applications. In a case that the screen off time interval configured for the applications is short, the electronic device 101 needs to periodically obtain a user input to prevent brightness of the screen of the display 230 from decreasing. Requiring periodic user input may degrade a user experience (UX) for an application. Conversely, in a case that the screen off time interval configured for the applications is long, as a turn-on time of the screen of the display 230 increases, unnecessary power consumption of the electronic device 101 may be caused. In order to solve the problem, operations of the electronic device 101 for configuring a screen off time interval for each application and adaptively changing the screen off time interval are described.

Referring to FIG. 4B, the electronic device 101 may display screens for configuring a screen off time interval for each application on the display 230. In an example, an application that displays the screens for configuring the screen off time interval for each application may be referred to as a display assistant application. For example, the electronic device 101 may display objects of applications for configuring an automatic screen off time interval on a first screen 410. In an example, the electronic device 101 may display an object 411 for a first application, an object 412 for a second application, and an object 413 for a third application through the first screen 410 of the display 230. However, this is only an example, and the present disclosure is not limited thereto. For example, the electronic device 101 may display only some of the objects through the first screen 410 of the display 230. In the example illustrated in FIG. 4B, the electronic device 101 may obtain a user input (e.g., a touch input) for configuring a screen off time interval for the third application. The electronic device 101 may change a screen displayed through the display 230 from the first screen 410 to a second screen 420 based on obtaining a user input.

For example, the electronic device 101 may display objects associated with screen off time intervals that may be configured for the third application through the second screen 420 of the display 230. For example, the electronic device 101 may display an object 421 for the first time interval (e.g., 15 seconds), an object 422 for the second time interval (e.g., 30 seconds), an object 423 for the third time interval (e.g., 1 minute), an object 424 for the fourth time interval (e.g., 5 minutes), an object 425 for the fifth time interval (e.g., 10 minutes), an object 426 for the sixth time interval (e.g., 15 minutes) and an object 427 for automatically configuring (or for adaptively configuring) a screen off time interval through the second screen 420 of the display 230. In the example illustrated in FIG. 4B, the electronic device 101 may obtain a user input (e.g., a touch input) for automatically configuring (or for adaptively configuring) the screen off time interval for the third application. The electronic device 101 may change the screen displayed through the display 230 from the second screen 420 to a third screen 430 based on obtaining a user input. Meanwhile, although not illustrated, the electronic device 101 may display an object for configuring a first time interval (e.g., the first time interval 301 of FIG. 3A) for the third application and/or an object for configuring a second time interval (e.g., the second time interval 302 of FIG. 3B) for the third application through the display 230. The electronic device 101 may configure the first time interval and/or the second time interval for the application independently of a screen off time interval based on a user input for at least one of the objects.

For example, the electronic device 101 may display objects for applications in which a screen off time interval is individually configured through the third screen 430 of the display 230. For example, the electronic device 101 may display an object 431 indicating a screen off time interval (e.g., 30 seconds) configured for a fourth application, an object 432 indicating a screen off time interval (e.g., 1 minute) configured for a fifth application, an object 433 indicating a screen off time interval (e.g., 10 minutes) configured for a sixth application, and an object 434 indicating a screen off time interval (e.g., optimal) configured for the third application through the third screen 430 of the display 230. As described in FIG. 4B, a user experience (UX) using an application may be improved by individually configuring a screen off time interval for each application. An application described below may mean an application in which a user input for automatically configuring (or for adaptively configuring) a screen off time interval in accordance with FIG. 4B is obtained.

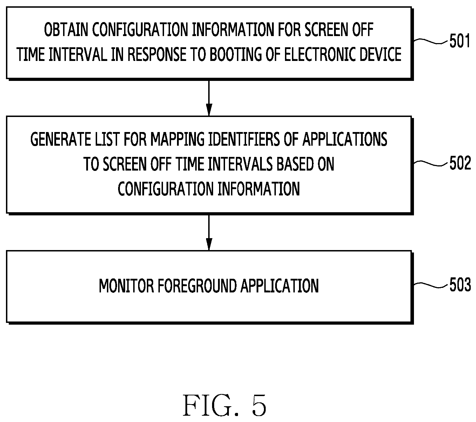

FIG. 5 is a flowchart indicating operations of an electronic device for monitoring a foreground application. Operations of FIG. 5 may be performed by the electronic device 101 of FIGS. 1 and 2. For example, at least some of the operations may be controlled by a processor 210 of the electronic device 101. Hereinafter, each of the operations may be sequentially performed, but is not necessarily performed sequentially. For example, an order of each of the operations may be changed. For example, at least two operations may be performed in parallel. Operations of the electronic device 101 for monitoring the foreground application are described in FIG. 5. The foreground application may indicate an application in which a user interface (UI) of the application is displayed through a display 230 of the electronic device 101.

Referring to FIG. 5, in an operation 501, the electronic device 101 according to an embodiment may obtain configuration information for a screen off time interval in response to booting of the electronic device 101. For example, the electronic device 101 may obtain information on a screen off time interval configured for applications from memory 220. The applications may include applications (e.g., the third application of FIG. 4B) selected (or configured) by a user to adaptively configure (or update) a screen off time interval.

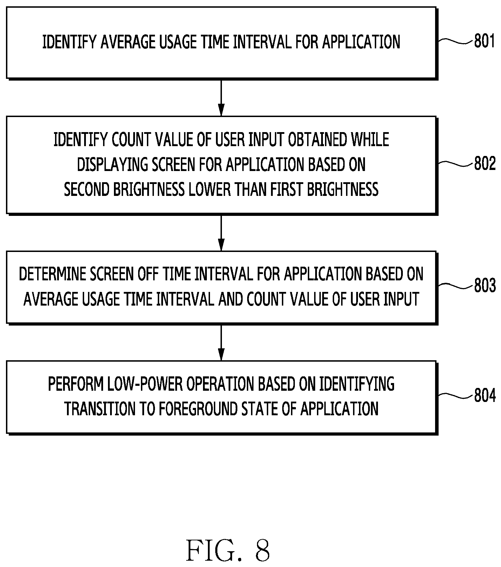

In an operation 502, the electronic device 101 according to an embodiment may generate a list for mapping identifiers of applications to screen off time intervals based on the configuration information. In an example, the identifier of the application may correspond to a package name of the application. For example, a screen off time interval may indicate a screen off time interval determined (or updated) by operations of FIG. 8 described below. In another example, in case that an application is first executed, a screen off time interval may indicate a screen off time interval (e.g., the screen off time interval of FIG. 4A) commonly configured for applications.

In an operation 503, the electronic device 101 according to an embodiment may monitor the foreground application. For example, the electronic device 101 may activate (or register) a function (e.g., a process observer) for monitoring the foreground application. The electronic device 101 may identify a state of an application in accordance with the function for monitoring the foreground application. For example, the electronic device 101 may identify whether the state of the application corresponds to a foreground state in accordance with the function. In an example, the electronic device 101 may identify that the state of the application corresponds to the foreground state (e.g., true) in accordance with the function. In another example, the electronic device 101 may identify that the state of the application does not correspond to the foreground state (e.g., false) in accordance with the function.

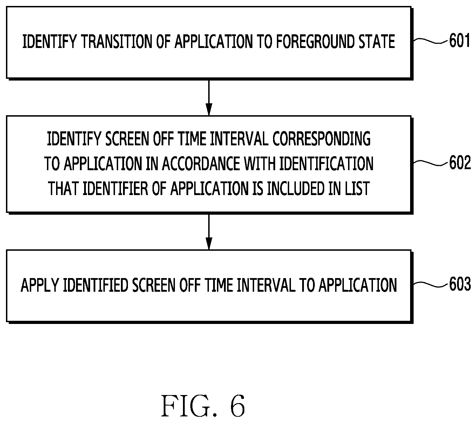

FIG. 6 is a flowchart indicating operations of an electronic device for configuring a screen off time interval for an application in a foreground state. Operations of FIG. 6 may be performed by the electronic device 101 of FIGS. 1 and 2. For example, at least some of the operations may be controlled by a processor 210 of the electronic device 101. Hereinafter, each of the operations may be sequentially performed, but is not necessarily performed sequentially. For example, an order of each of the operations may be changed. For example, at least two operations may be performed in parallel.

Referring to FIG. 6, in an operation 601, the electronic device 101 according to an embodiment may identify a transition from a non-foreground state (e.g. background state or non-running state) of an application to a foreground state. For example, the electronic device 101 may identify that a state of the application changes to the foreground state from a non-foreground state based on a function (e.g., a process observer) for monitoring a foreground application.

In an operation 602, the electronic device 101 according to an embodiment may identify a screen off time interval corresponding to an application in accordance with an identification that an identifier (e.g., a package name, a unique application identifier, a name of an application, a unique serial number of an application) of the application is included in a list. For example, the list may correspond to the list generated in the operation 502. For example, the list may include identifiers of applications and information on a screen time interval corresponding to each of the identifiers.

In an operation 603, the electronic device 101 according to an embodiment may apply the identified screen off time interval to an application. For example, the electronic device 101 may apply the identified screen off time interval to the application by transmitting the identified screen off time interval to a power manager service 226. For example, the identified screen off time interval may be applied with priority over a common screen off time (e.g., the screen off time interval configured in accordance with FIG. 4A) configured in a system.

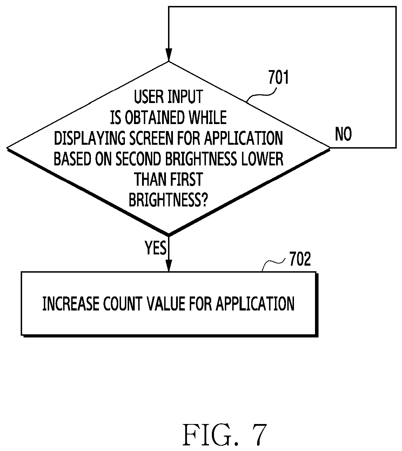

FIG. 7 is a flowchart indicating operations of an electronic device for counting a user input for increasing brightness of a screen of a display. Operations of FIG. 7 may be performed by the electronic device 101 of FIGS. 1 and 2. For example, at least some of the operations may be controlled by a processor 210 of the electronic device 101. Hereinafter, each of the operations may be sequentially performed, but is not necessarily performed sequentially. For example, an order of each of the operations may be changed. For example, two operations may be performed in parallel.

Referring to FIG. 7, in an operation 701, the electronic device 101 according to an embodiment may identify whether a user input (e.g., a touch input) is obtained while displaying a screen for an application based on a second brightness 350 lower than a first brightness (or a default brightness) 340.

In an embodiment, the electronic device 101 may display a screen for an application based on the first brightness 340 in response to a transition of the application to a foreground state. The electronic device 101 may start a timer based on displaying the screen for the application with the first brightness 340. The electronic device 101 may identify whether a user input is obtained during a first time interval 301. For example, the electronic device 101 may restart (or reset) the timer in accordance with an identification that the user input is obtained during the first time interval 301. In another example, the electronic device 101 may change brightness of the screen for the application from the first brightness 340 to the second brightness 350 in accordance with an identification that the user input is not obtained during the first time interval 301.

In an embodiment, the electronic device 101 may activate a function (e.g., a wake lock) causing the screen for the application to be maintained with the first brightness 340 regardless of a user input and a screen off configuring time. In an example, the electronic device 101 may activate the function based on identifying playback of a video in a video application. In an example, the electronic device 101 may activate the function to maintain the screen for a certain time during phone call transmission and reception in a phone application. The electronic device 101 may display the screen for the application with the first brightness 340 while the function is activated. For example, the electronic device 101 may deactivate the function causing the screen for the application to be maintained with the first brightness 340 based on an event. In an example, the electronic device 101 may deactivate the function based on identifying that the playback of the video in the video application has ceased. In an example, the electronic device 101 may deactivate the function based on identifying that the phone call transmission and reception in the phone application has ceased.

In an embodiment, the electronic device 101 may display the screen for the application with the second brightness 350 in accordance with an identification that the user input is not obtained during the first time interval 301. The electronic device 101 may identify whether the user input is obtained during a second time interval 302. For example, in case that the user input is not obtained during the second time interval 302, the timer may expire. The electronic device 101 may identify that the user input is not obtained during the second time interval 302, based on the expiration of the timer. The electronic device 101 may cause turn-off 360 of the screen for the application in accordance with the identification that the user input is not obtained during the second time interval 302. In another example, the electronic device 101 may change the brightness of the screen for the application from the second brightness 350 to the first brightness 340 in accordance with an identification that the user input is obtained during the second time interval 302. The electronic device 101 may restart the timer for a screen off time interval in accordance with the identification that the user input is obtained during the second time interval 302.

In an operation 702, the electronic device 101 according to an embodiment may increase a count value for an application. The count value may indicate the number of times that the user input is obtained while the screen of the application is displayed with the second brightness 350. The electronic device 101 may increase the count value for the application in accordance with an identification that the user input is obtained while displaying the screen for the application with the second brightness 350. In an example, the count value may be increased by 1. However, this is only an example, and the present disclosure is not limited thereto. For example, the electronic device 101 may store the increased count value in memory 220.

FIG. 8 is a flowchart indicating operations of an electronic device to determine a screen off time interval. At least some of operations of FIG. 8 may be performed by the electronic device 101 of FIGS. 1 and 2. For example, at least some of the operations may be controlled by a processor 210 of the electronic device 101. Hereinafter, each of the operations may be sequentially performed, but is not necessarily performed sequentially. For example, an order of each of the operations may be changed. For example, at least two operations may be performed in parallel. In FIG. 8, operations of the electronic device 101 for determining a screen off time interval in case that an application is released from a foreground state are described.

Referring to FIG. 8, in an operation 801, the electronic device 101 according to an embodiment may identify an average usage time interval for an application. For example, the electronic device 101 may identify an average usage time for the application in accordance with an identification that the application is released from the foreground state.

In an embodiment, the electronic device 101 may identify a change in a foreground application. For example, the electronic device 101 may identify the change in the foreground application based on a function (e.g., a process observer) for monitoring the foreground application. The electronic device 101 may identify that a state of an application is released from the foreground state in accordance with the change in the foreground application. The state of the application released from the foreground state may include a state in which the application is executed in a background and a state in which the application is terminated. A user interface (UI) for the application released from the foreground state may not be displayed through a screen of a display 230.

In an embodiment, the electronic device 101 may identify a usage time interval of the application in the foreground state. The usage time interval of the application may mean a time interval in which use of the application is intended by a user. For example, the usage time interval may indicate a time interval excluding a time interval in which the application is executed regardless of an intention of the user from an execution time interval of the application. For example, the time interval in which the application is executed regardless of the intention of the user may include an activation time interval of a function (e.g., a wake lock) causing the screen for the application to be maintained at a first brightness 340 regardless of a user input and a screen off configuring time and/or a time interval in which the user identified through a camera and/or a sensor of the electronic device 101 does not look at the screen for the application. However, the present disclosure is not limited thereto.

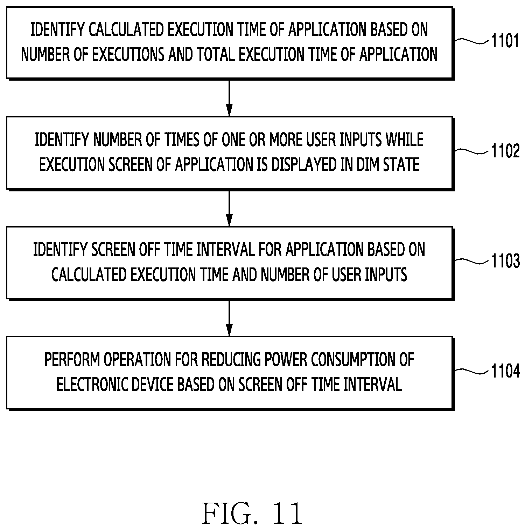

In an embodiment, the electronic device 101 may identify the average usage time interval for the application based on the usage time interval of the application. In one example, the average usage time may be identified by dividing a total usage time interval, identified based on the usage time interval, by the number of times the application is executed. However, this is only an example, and the present disclosure is not limited thereto. For example, the average usage time interval may be identified by excluding an average time interval in which the application is executed regardless of the intention of the user from an average execution time interval (e.g., a calculated executed time interval of Figure 11) of the application in the foreground state.

For example, the average time interval in which the application is executed regardless of the intention of the user may include an average activation time interval of a function causing the screen for the application to be displayed with the first brightness 340 and/or an average time interval in which the user identified through the camera and/or the sensor of the electronic device 101 does not look at the screen for the application. However, the present disclosure is not limited thereto.

In an operation 802, the electronic device 101 according to an embodiment may identify a count value (or the number of times) of a user input (e.g., a touch input) obtained while displaying the screen for the application with a second brightness 350 lower than the first brightness 340. For example, the electronic device 101 may identify a count value of a user input to increase brightness of the screen of the display 230 while the display 230 operates in a second mode 320.

In an operation 803, the electronic device 101 according to an embodiment may determine a screen off time interval for the application based on the average usage time interval and the count value of the user input.

In an embodiment, the electronic device 101 may determine (or update) the new screen off time interval for the application based on the average usage time interval of the application, the count value of the user input obtained while displaying the screen for the application based on the second brightness 350, and/or a second time interval 302 identified based on a current screen off time interval. For example, the second time interval 302 may be identified based on a ratio to the current screen off time interval. In an example, the second time interval 302 may correspond to 33 percent (%) of the current screen off time interval. For example, a maximum value of the second time interval 302 used to determine (or update) the new screen off time interval may be limited. In an example, the maximum value of the second time interval 302 used to determine (or update) the screen off time interval may be limited to 20 seconds. However, this is only an example, and the present disclosure is not limited thereto. In a non-limiting example, the screen off time interval for the application may be determined further based on a grip posture of the user with respect to the electronic device 101, and/or whether the user is looking at the electronic device 101, and/or touch input frequency of the user, and/or a touch input time of the user, and/or an average usage time interval for an application of another user.

In an embodiment, the electronic device 101 may identify a first value based on the average usage time interval of the application and a first weight. In an example, the first weight may be configured differently in accordance with a type (e.g., a tablet) of the application and/or the electronic device 101. However, this is only an example, and the present disclosure is not limited thereto. For example, the electronic device 101 may identify a second value based on the count value of the user input, the second time interval 302, and a second weight. The user input may be obtained while the screen of the application is displayed based on the second brightness 350 lower than the first brightness 340. The second time interval 302 may be identified based on the current screen off time interval. In an example, the second weight may be configured differently in accordance with the type of the application and/or the electronic device 101. However, this is only an example, and the present disclosure is not limited thereto.

For example, the electronic device 101 may identify a third value that is a sum of the first value and the second value. The electronic device 101 may identify a fifth value based on the third value and a fourth value indicating a maximum screen off time interval (e.g., 15 minutes (900 seconds)). The maximum screen off time interval may indicate a maximum value of a screen off time interval that may be configured for the application. In an example, the electronic device 101 may identify the fifth value as the third value in accordance with an identification that the third value is less than the fourth value. In another example, the electronic device 101 may identify the fifth value as the fourth value in accordance with an identification that the fourth value is less than the third value.

For example, the electronic device 101 may identify a value corresponding to a screen turn off time interval based on the fifth value and a sixth value indicating a minimum screen turn off time interval (e.g., 15 seconds). The minimum screen off time interval may indicate a minimum value of the screen off time interval that may be configured for the application. In an example, the electronic device 101 may determine the value corresponding to the screen off time interval as the fifth value in accordance with an identification that the fifth value is greater than the sixth value. In another example, the electronic device 101 may determine the value corresponding to the screen off time interval as the sixth value in accordance with an identification that the sixth value is greater than the fifth value.

For example, the screen off time interval may be determined in accordance with Equation 1 below.

Tn_{ew} may indicate the new screen off time interval for the application. T_{avg} may indicate the average usage time interval of the application. The average usage time interval may mean an average usage time interval intended by the user for the use of the application. For example, the average usage time interval may mean a time interval excluding the average time interval in which an application is executed regardless of an intention of the user from an average execution time interval in which the application is executed in the foreground state. For example, the average time interval in which the application is executed regardless of the intention of the user may include an average activation time interval of a function (e.g., a wake lock) causing the screen for the application to be maintained at the first brightness 340 regardless of a user input (and/or the intention of the user) and/or the average time interval in which the user identified through the camera (and/or the sensor) of the electronic device 101 does not look at the screen for the application. For example, in case that an application is first executed, T_{avg} may be a screen off time interval (e.g., 30 seconds) configured as a default value in a system.

Uₙᵤₘ may indicate the count value of the user input obtained while the screen for the application is displayed with a second brightness 350 lower than the first brightness 340. For example Uₙᵤₘ may be the number of user inputs obtained while the screen is dimmed. T_{dim} may indicate the second time interval 302 identified based on the current screen off time interval. W₂ may indicate the second weight. Tₘₐₓ may indicate the maximum screen off time interval (e.g., 900 seconds). Tₘᵢₙ may indicate the minimum screen off time interval (e.g., 15 seconds).

In an example, the average usage time of the application may be 300 seconds. The first weight may be 0.7. The count value of the user input obtained while the screen for the application is displayed with a second brightness lower than the first brightness 340 may be 5. The second time interval 302 identified based on the current screen off time interval may be 5 seconds. The second weight may be 0.3. The maximum screen off time interval may be 900 seconds. The minimum screen off time interval may be 15 seconds. In the example above, a new screen off time interval may be determined to be 217.5 seconds in accordance with Equation 2 below.${T}_{new} = \left.Max\left(min\left(\left(300*0.7\right)+\left(\left(5*5\right)*0.3\right)\right),900\right),15\right)$

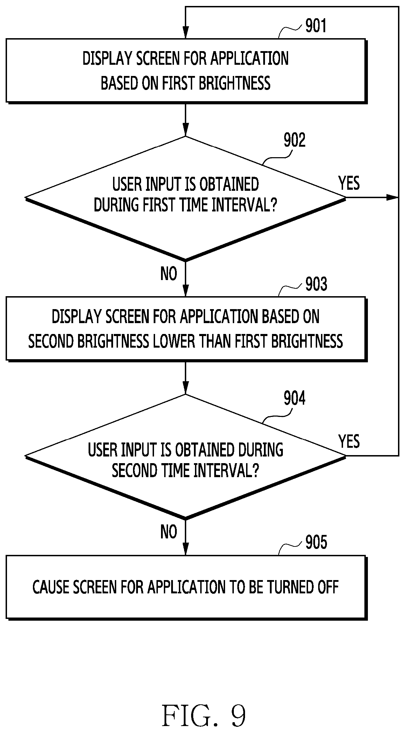

In an operation 804, the electronic device 101 according to an embodiment may perform a low-power operation for changing the screen for the application to screen off without the user input based on identifying a transition to the foreground state. The low-power operation will be described in reference to FIG. 9 .

FIG. 9 is a flowchart indicating operations of an electronic device for performing a low power operation based on a screen off time interval. Operations of FIG. 9 may be performed by the electronic device 101 of FIGS. 1 and 2. For example, at least some of the operations may be controlled by a processor 210 of the electronic device 101. Hereinafter, each of the operations may be sequentially performed, but is not necessarily performed sequentially. For example, an order of each of the operations may be changed. For example, at least two operations may be performed in parallel. In FIG. 9, operations of the electronic device 101 for changing brightness of a screen of a display 230 without a user input based on a screen off time interval in a case that an application is transitioned to a foreground state are described.

Referring to FIG. 9, in an operation 901, the electronic device 101 according to an embodiment may display a screen for an application with a first brightness (or a default brightness) 340. For example, the electronic device 101 may display the screen for the application with a first brightness 340 based on identifying a transition of the application to the foreground state from a non-foregrounds state (e.g., background state or non-running state).

In an embodiment, the electronic device 101 may monitor a foreground application. For example, the electronic device 101 may identify a state of the application in accordance with a function (e.g., a process observer) for monitoring the foreground application. For example, the electronic device 101 may identify whether the state of the application is the foreground state in accordance with the function. In an example, the electronic device 101 may identify that the state of the application corresponds to the foreground state in accordance with the function. The electronic device 101 may display the screen for the application based with a first brightness 340 in accordance with an identification that the state of the application corresponds to the foreground state.

In an operation 902, the electronic device 101 according to an embodiment may identify whether a user input (e.g., a touch input) is obtained during a first time interval 301.

In an embodiment, the electronic device 101 may identify a screen off time interval for the application. For example, the electronic device 101 may identify configuration information for the screen off time interval. The electronic device 101 may identify whether the screen off time interval configured for the application entering the foreground state exists based on the configuration information for the screen off time interval. For example, the electronic device 101 may identify a corresponding time interval as a screen off time interval in accordance with an identification that the screen off time interval configured for the application exists. For example, the electronic device 101 may identify a time interval (e.g., 30 seconds) configured as a default value in a system as a screen off time interval in accordance with an identification that the screen off time interval configured for the application does not exist.

In an embodiment, the electronic device 101 may identify the first time interval 301 based on the screen off time interval for the application. For example, the first time interval 301 may be identified based on a ratio to the screen off time interval of the application. In an example, the first time interval 301 may correspond to 67 percent (%) of the screen off time interval. However, this is only an example, and the present disclosure is not limited thereto.

In an embodiment, the electronic device 101 may display the screen for the application with the first brightness 340 in response to a transition of the application to the foreground state. The electronic device 101 may start a timer in response to displaying the screen for the application with the first brightness 340. The electronic device 101 may identify whether a user input is obtained during the first time interval 301 based on the timer. For example, the electronic device 101 may obtain the user input during the first time interval 301. The electronic device 101 may restart (or reset) the timer based on obtaining the user input in the first time interval 301. If a user input is obtained during the first time interval 301, the electronic device 101 according to an embodiment may display a screen for an application with a first brightness according to operation 901. In another example, the electronic device 101 may not obtain the user input in the first time interval 301. The electronic device 101 may identify that the user input is not obtained during the first time interval 301 based on the timer.

In an operation 903, the electronic device 101 according to an embodiment may display the screen for the application with a second brightness 350 lower than the first brightness 340. For example, the electronic device 101 may display the screen of the display 230 with the second brightness 350 lower than the first brightness 340 in accordance with an identification that the user input is not obtained during the first time interval 301. In case that the user input is not obtained during the first time interval, power consumption of the electronic device 101 may be reduced by displaying the screen of the display 230 based on the second brightness 350 lower than the first brightness 340.

In an operation 904, the electronic device 101 according to an embodiment may identify whether a user input is obtained during a second time interval 302.

In an embodiment, the electronic device 101 may identify the second time interval 302 based on the screen off time interval for the application. For example, the second time interval 302 may be identified based on the ratio to the application to the screen off time interval. In an example, the second time interval 302 may correspond to 33 percent (%) of the screen off time interval. However, this is only an example, and the present disclosure is not limited thereto. For example, the second time interval 302 may be calculated by subtracting the first time interval 301 from the screen off time interval.

In an embodiment, the electronic device 101 may identify whether the user input is obtained during the second time interval 302 based on the timer. For example, the electronic device 101 may obtain the user input during the second time interval 302. The electronic device 101 may change brightness of the screen of the display 230 from the second brightness 350 to the first brightness 340 based on obtaining the user input during the second time interval 302. The electronic device 101 may restart (or reset) a timer associated with the screen off time interval based on obtaining the user input in the second time interval 302. The electronic device 101 may increase a count value for the application based on obtaining the user input in the second time interval 302. The count value may indicate the number of times that a user input is obtained while the screen of the application is displayed with the second brightness 350. In another example, the electronic device 101 may not obtain the user input in the second time interval 302. In case that the user input is not obtained in the second time interval 302, the timer may expire. The electronic device 101 may identify that the user input is not obtained in the second time interval 302 in accordance with the expiration of the timer.

In an operation 905, the electronic device 101 according to an embodiment may cause the screen for the application to be turned off. For example, the electronic device 101 may cause the screen of the display 230 to be turned off in accordance with an identification that the user input is not obtained during the second time interval 302. For example, when the user input is not obtained during the screen off time interval, which is a sum of the first time interval 301 and the second time interval 302, the electronic device 101 may reduce power consumption of the electronic device 101 by causing the screen of the display 230 to be turned off.

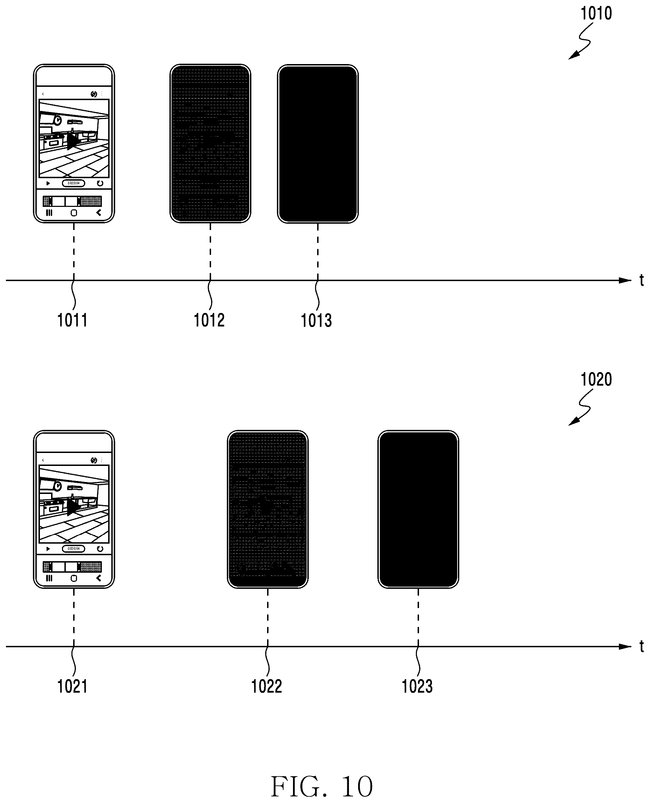

FIG. 10 exemplifies operations of an electronic device in accordance with a screen off time interval.

For example, an electronic device 101 may identify a screen off time interval for an application in accordance with an identification that the application (e.g., a video application) enters a foreground state. The foreground state may mean a state in which a user interface (UI) for an application is displayed through a screen of a display 230. For example, the electronic device 101 may identify configuration information for the screen off time interval. The electronic device 101 may identify whether a screen off time interval configured for an application transitioned to the foreground state exists based on the configuration information for the screen off time interval.

A situation 1010 exemplifies a case that a screen off time interval configured individually for an application or collectively for applications does not exist. The electronic device 101 may identify a time interval (e.g., 30 seconds) configured as a default value in a system as a screen off time interval in accordance with an identification that the screen off time interval configured for the application does not exist. The electronic device 101 may identify a first time interval 301 and a second time interval 302 based on the screen off time interval. In an example, the first time 301 interval may correspond to 67 percent (%) of the screen off time interval, and the second time interval 302 may correspond to 33 percent of the screen off time interval. However, this is only an example, and the present disclosure is not limited thereto. The first time interval 301may correspond to a time interval for changing brightness of a screen for the application from a first brightness 340 to a second brightness 350. For example, the first time interval 301 may be the time interval where the screen is displayed at a first brightness 340 before changing to a second brightness 350. The second time interval 302 may correspond to a time interval for changing the screen of the application displayed based on the second brightness 350 to screen off. For example, the second time interval 302 may be the time interval where the screen is displayed at a second brightness 350 before changing to screen off. In the situation 1010, the first time interval 301 may correspond to 20 seconds and the second time interval 302 may correspond to 10 seconds. Referring to FIG. 10, the first time interval 301 may mean a time interval between a first time 1011 when an application enters the foreground state and a second time 1012 when brightness of a screen is changed from the first brightness 340 to the second brightness 350. The second time interval 302 may mean a time interval between the second time 1012 and a third time 1013 in which the screen displayed by the second brightness 350 is changed to screen off. The electronic device 101 may change the brightness of the screen for the application from the first brightness 340 to the second brightness 350 in accordance with an identification that a user input is not obtained during the first time interval 301. The electronic device 101 may change the screen displayed based on the second brightness 350 to screen off in accordance with an identification that the user input is not obtained during the second time interval 302.

A situation 1020 exemplifies a case where a screen off time interval configured individually for the application or collectively for the applications exist. The electronic device 101 may identify a corresponding time interval as a screen off time interval in accordance with an identification that the screen off time interval configured for the application exists. The electronic device 101 may identify the first time interval 301 and the second time interval 302 based on the screen off time interval. The first time interval 301 may correspond to a time interval for changing the brightness of the screen for the application from the first brightness 340 to the second brightness 350. The second time interval 302 may correspond to a time interval for changing the screen of the application displayed with the second brightness 350 to screen off. In the situation 1020, a screen off time interval optimized in accordance with a detail described in the present disclosure may be 39 seconds. The first time interval 301 may correspond to 26 seconds, and the second time interval 302 may correspond to 13 seconds. Referring to FIG. 10, the first time interval 301 may mean a time interval between a fourth time 1021 when the application enters the foreground state and a fifth time 1022 when the brightness of the screen is changed from the first brightness 340 to the second brightness 350. The second time interval 302 may mean a time interval between the fifth time 1022 and a sixth time 1023 in which the screen displayed by the second brightness 350 is changed to screen off. The electronic device 101 may change the brightness of the screen for the application from the first brightness 340 to the second brightness 350 in accordance with an identification that the user input is not obtained during the first time interval 301. The electronic device 101 may change the screen displayed with the second brightness 350 to screen off in accordance with the identification that the user input is not obtained during the second time interval.

As described in FIGS. 1 to 10, a user experience (UX) may be improved by providing a function for configuring a screen off time for each application. In addition, a time interval in which the screen of the display is unnecessarily turned on may be reduced, by optimizing the screen off time for each application. Power consumption of the electronic device 101 may be reduced by reducing the time interval in which the screen of the display is unnecessarily turned on. In addition, the user experience may be improved by reducing frequency of a user input to maintain screen brightness by optimizing the screen off time for each application.

FIG. 11 is a flowchart indicating operations of an electronic device to determine a screen off time interval. At least some of operations of FIG. 11 may be performed by the electronic device 101 of FIGS. 1 and 2. For example, at least some of the operations may be controlled by a processor 210 of the electronic device 101. Hereinafter, each of the operations may be sequentially performed, but is not necessarily performed sequentially. For example, an order of each of the operations may be changed. For example, at least two operations may be performed in parallel.

Referring to FIG. 11, in an operation 1101, the electronic device 101 according to an embodiment may identify a calculated execution time of an application based on the number of executions and a total execution time of the application. The calculated execution time may be an average execution time of the application.

In an embodiment, the electronic device 101 may identify a change in a foreground application. For example, the electronic device 101 may identify the change in the foreground application based on a function (e.g., a process observer) for monitoring the foreground application. The electronic device 101 may identify that an application is released from a foreground state in accordance with the change in the foreground application. A state of the application released from the foreground state may include a state in which the application is executed in a background and/or a state in which the application is terminated. In a case of being released from the foreground state, an execution screen (or a user interface (UI)) of the application may not be displayed through a screen of a display 230. The electronic device 101 may identify the calculated execution time of the application in accordance with an identification that the application is released from the foreground state.

In an embodiment, the electronic device 101 may identify the number of executions and the total execution time of the application. The number of executions of the application may correspond to the number of times that the application enters the foreground state. The total execution time of the application may mean a total time when the application is executed in the foreground state. For example, the total execution time of the application may mean a sum of all the time when the application is in the foreground state.

In an embodiment, the electronic device 101 may identify the calculated execution time of the application based on the number of executions and the total execution time of the application. For example, the calculated execution time of the application may mean an average execution time of the application. However, the present disclosure is not limited thereto.

In an operation 1102, the electronic device 101 according to an embodiment may identify the number of times of one or more user inputs obtained while an execution screen of the application is displayed in a dim state. For example, a state of the execution screen of the application may include a default state, the dim state, and/or an off state. In the default state, the execution screen of the application may be displayed with a first luminance (or a first brightness 340). In the dim state, the execution screen of the application may be displayed with a second luminance (or a second brightness 350) lower than the first luminance. In the off state, the execution screen of the application may be turned off (e.g., 360 of FIG. 3). For example, the electronic device 101 may identify the number of times (e.g., a count value of a touch input) of the one or more user inputs obtained while the execution screen of the application is displayed in the dim state. The user input may be an input to transit the dim state of the execution screen of the application to the default state.

In an operation 1103, the electronic device 101 according to an embodiment may identify a screen off time interval for the application based on the calculated execution time and the number of user inputs.

In an embodiment, the electronic device 101 may identify an average usage time for the application based on the calculated execution time. The average usage time interval may mean a time that use of the application is intended by a user among an average time when the application is executed in the foreground state. For example, the average usage time interval may indicate a time excluding a time when the application is executed regardless of an intention of the user from the average time when the application is executed in the foreground state. For example, the time when the application is executed regardless of the intention of the user may include an activation time of a function (e.g., a wake lock) causing a screen for the application to be maintained at the first luminance (e.g., the first brightness 340) regardless of the user input and the screen off time interval, and/or a time when a gaze of the user identified through a camera and/or a sensor of the electronic device 101 is not located in the execution screen of the application. However, the present disclosure is not limited thereto.

In an embodiment, the electronic device 101 may determine (or update) the screen off time interval for the application based on the average usage time interval of the application, the number of user inputs obtained while displaying the execution screen of the application in the dim state, and/or a time interval (e.g., the second time interval 302 of FIG. 3A) for turning off the execution screen of the application displayed in the dim state. For example, the time interval for turning off the execution screen of the application displayed in the dim state may be identified based on a current screen off time interval. In an example, the time interval for turning off the execution screen of the application displayed in the dim state may correspond to 33 percent (%) of the current screen off time interval. However, this is only an example, and the present disclosure is not limited thereto. For example, the time interval for turning off the execution screen of the application displayed in the dim state may be configured by a user input. For example, a maximum value of the time interval used to determine (or update) the screen off time interval may be limited to a specific value (e.g., 20 seconds). However, this is only an example, and the present disclosure is not limited thereto.

In an embodiment, the electronic device 101 may identify a first value based on the average usage time interval of the application and a first weight. In an example, the first weight may be configured differently in accordance with a type of the application and/or the electronic device 101. However, this is only an example, and the present disclosure is not limited thereto.

In an embodiment, the electronic device 101 may identify a second value based on the number of user inputs obtained while the execution screen of the application is displayed in the dim state, the time interval for turning off the execution screen of the application displayed in the dim state, and a second weight. In an example, the second weight may be configured differently in accordance with a type of the application and/or the electronic device 101. However, this is only an example, and the present disclosure is not limited thereto.

In an embodiment, the electronic device 101 may identify a third value that is a summation of the first value and the second value. The electronic device 101 may identify a fifth value based on the third value and a fourth value indicating a maximum value (e.g., 900 seconds) configured for the screen off time interval. For example, the electronic device 101 may identify the fifth value as the third value in accordance with an identification that the third value is less than the fourth value. In another example, the electronic device 101 may identify the fifth value as the fourth value in accordance with an identification that the third value is equal to or greater than the fourth value.

In an embodiment, the electronic device 101 may identify a value corresponding to the screen off time interval based on the fifth value and a sixth value indicating a minimum value (e.g., 15 seconds) configured for the screen off time interval. For example, the electronic device 101 may identify a value corresponding to the screen off time interval as the fifth value in accordance with an identification that the fifth value is greater than the sixth value. In another example, the electronic device 101 may identify the value corresponding to the screen off time interval as the sixth value in accordance with an identification that the fifth value is less than or equal to the sixth value. For example, the screen off time interval may be determined in accordance with Equation 1 described in FIG. 7.

In an operation 1104, the electronic device 101 according to an embodiment may perform an operation for reducing power consumption of the electronic device 101 based on the screen off time interval.

In an embodiment, the electronic device 101 may identify a first time interval (e.g., the first time interval 301 of FIG. 3A) and a second time interval (e.g., the second time interval 302 of FIG. 3A) based on the screen off time interval. The first time interval may mean a time interval for changing brightness of the execution screen of the application displayed with the first luminance in the default state to a second luminance in the dim state lower than the first luminance. In an example, the first time interval may be referred to as a default time interval or another term having an equivalent technical meaning thereto. The second time interval may mean a time interval for turning off the execution screen of the application displayed in the dim state. In an example, the second time interval may be referred to as a dim time interval or another term having an equivalent technical meaning thereto. For example, the first time interval and the second time interval may be identified based on a determined (or updated) screen off time interval. In an example, the first time interval and the second time interval may be defined as a ratio of the determined screen off time interval. The first time interval may correspond to 67% of the screen off time interval, and the second time interval may correspond to 33% of the screen off time interval. However, this is only an example, and the present disclosure is not limited thereto. For example, the first time interval and the second time interval may be configured in accordance with a user input.

In an embodiment, the electronic device 101 may monitor the foreground application. For example, the electronic device 101 may identify a state of the application in accordance with the function (e.g., the process observer) for monitoring the foreground application. For example, the electronic device 101 may identify whether the application is in the foreground state in accordance with the function.

In an embodiment, the electronic device 101 may display the execution screen of the application with the first luminance (e.g., the first brightness 340) in accordance with an identification that the application enters the foreground state. The state of the execution screen of the application displayed with the first luminance may be referred to as the default state. The electronic device 101 may start a timer in response to displaying the execution screen of the application with the first luminance. The electronic device 101 may identify whether a user input is obtained during the first time interval based on the timer. For example, the electronic device 101 may restart (or reset) the timer in accordance with the identification that the user input is obtained during the first time interval. In another example, the electronic device 101 may display the execution screen of the application with the second luminance (e.g., the second brightness 350) lower than the first luminance in accordance with an identification that the user input is not obtained during the first time interval. A state of the execution screen of the application displayed based on the second luminance may be referred to as the dim state. When the user input is not obtained during the first time interval, power consumption of the electronic device 101 may be reduced by displaying the execution screen of the application with the second luminance lower than the first luminance.

In an embodiment, the electronic device 101 may identify whether a user input is obtained during the second time interval based on the timer, in response to displaying the execution screen of the application based on the second luminance. For example, the electronic device 101 may display the execution screen of the application with the first luminance in accordance with an identification that the user input is obtained during the second time interval. In another example, the electronic device 101 may cause the execution screen of the application to be turned off in accordance with an identification that the user input is not obtained during the second time interval. For example, in accordance with the identification that the user input is not obtained during the second time interval, the electronic device 101 may cause the execution screen of the application to be turned off by controlling power supplied to the display 230. When the user input is not obtained during the screen off time interval, power consumption of the electronic device 101 may be reduced by causing the execution screen of the application to be turned off.

The technical problems to be achieved in the present disclosure are not limited to those described above, and other technical problems not mentioned herein will be clearly understood by those having ordinary knowledge in the art to which the present disclosure belongs.

As described above, an electronic device may comprise a display. The electronic device may comprise memory, including one or more storage media, storing instructions. The electronic device may comprise at least one processor including processing circuitry. The instructions, when executed by the at least one processor individually or collectively, may cause the electronic device to identify, in accordance with an identification that an application is released from a foreground state, an execution time interval of the application in the foreground state and an activation time interval of a function causing a screen for the application to be displayed based on a default brightness among the execution time interval. The instructions, when executed by the at least one processor individually or collectively, may cause the electronic device to determine a screen off time interval for the application, based on a usage time interval excluding the activation time interval of the function from the execution time interval of the application. The instructions, when executed by the at least one processor individually or collectively, may cause the electronic device to perform, based on the screen off time interval, a low-power operation for changing the screen for the application to screen off without a user input, in accordance with an identification that the application is changed to the foreground state.

For example, the instructions, when executed by the at least one processor individually or collectively, may cause the electronic device to identify a count value of a user input obtained while the screen for the application is displayed, based on a lower brightness than the default brightness. The instructions, when executed by the at least one processor individually or collectively, may cause the electronic device to determine the screen off time interval for the application, based on the usage time interval for the application and the count value.

For example, the instructions, when executed by the at least one processor individually or collectively, may cause the electronic device to identify, based on a current screen off time interval, a dim time interval for changing the screen for the application displayed, based on a lower brightness than the default brightness, to the screen off. The instructions, when executed by the at least one processor individually or collectively, may cause the electronic device to determine the screen off time interval for the application, based on the usage time interval for the application and the dim time interval.

For example, the instructions, when executed by the at least one processor individually or collectively, may cause the electronic device to identify an average usage time interval for the application, based on the usage time interval identified based on the execution time interval of the application and the activation time interval of the function. The instructions, when executed by the at least one processor individually or collectively, may cause the electronic device to determine the screen off time interval for the application based on the average usage time interval.

For example, the instructions, when executed by the at least one processor individually or collectively, may cause the electronic device to identify a first value based on the average usage time interval for the application and a first weight. The instructions, when executed by the at least one processor individually or collectively, may cause the electronic device to identify a second value based on a count value of a user input for the application, a dim time interval for the application identified based on a current screen off time interval, and a second weight. The instructions, when executed by the at least one processor individually or collectively, may cause the electronic device to identify a fourth value based on a third value indicating a summation of the first value and the second value and a maximum value for the screen off time interval. The instructions, when executed by the at least one processor individually or collectively, may cause the electronic device to determine the screen off time interval for the application based on the fourth value and a minimum value for the screen off time interval.

For example, the instructions, when executed by the at least one processor individually or collectively, may cause the electronic device to identify a bright time interval for changing the default brightness of the screen for the application to a lower brightness than the default brightness, based on the determined screen off time interval. The instructions, when executed by the at least one processor individually or collectively, may cause the electronic device to identify, based on the determined screen off time interval, a dim time interval for changing the screen for the application displayed, based on a lower brightness than the default brightness, to the screen off.

For example, the instructions, when executed by the at least one processor individually or collectively, may cause the electronic device to change the default brightness of the screen for the application to a lower brightness than the default brightness, in accordance with an identification that a user input is not obtained during a bright time interval. The instructions, when executed by the at least one processor individually or collectively, may cause the electronic device to change the screen for the application displayed based on a lower brightness than the default brightness, in accordance with an identification that a user input is not obtained during a dim time interval, to the screen off.

For example, the instructions, when executed by the at least one processor individually or collectively, may cause the electronic device to increase a count value for the application in response to a user input obtained while displaying the screen for the application based on a lower brightness than the default brightness.

For example, the instructions, when executed by the at least one processor individually or collectively, may cause the electronic device to determine the screen off time interval in accordance with an identification that the average usage time interval for the application is greater than the minimum value for the screen off time interval.

For example, the instructions, when executed by the at least one processor individually or collectively, may cause the electronic device to display a user interface (UI), through the display, for configuring the screen off time interval for a plurality of applications including the application.

As described above, a method performed by an electronic device comprising a display may comprise identifying, in accordance with an identification that an application is released from a foreground state, an execution time interval of the application in the foreground state and an activation time interval of a function causing a screen for the application to be displayed based on a default brightness among the execution time interval. The method may comprise determining a screen off time interval for the application, based on a usage time interval excluding the activation time interval of the function from the execution time interval of the application. The method may comprise performing, based on the screen off time interval, a low-power operation for changing the screen for the application to screen off without a user input, in accordance with an identification that the application is changed to the foreground state.

For example, the determining the screen off time interval may comprise identifying a count value of a user input obtained while the screen for the application is displayed, based on a lower brightness than the default brightness. The determining the screen off time interval may comprise determining the screen off time interval for the application, based on the usage time interval for the application and the count value.

For example, the determining the screen off time interval may comprise identifying, based on a current screen off time interval, a dim time interval for changing the screen for the application displayed, based on a lower brightness than the default brightness, to the screen off. The determining the screen off time interval may comprise determining the screen off time interval for the application, based on the usage time interval for the application and the dim time interval.

For example, the determining the screen off time interval may comprise identifying an average usage time interval for the application, based on the usage time interval identified based on the execution time interval of the application and the activation time interval of the function. The determining the screen off time interval may comprise determining the screen off time interval for the application based on the average usage time interval.

For example, the determining the screen off time interval may comprise identifying a first value based on the average usage time interval for the application and a first weight. The determining the screen off time interval may comprise identifying a second value based on a count value of a user input for the application, a dim time interval for the application identified based on a current screen off time interval, and a second weight. The determining the screen off time interval may comprise identifying a fourth value based on a third value indicating a summation of the first value and the second value and a maximum value for the screen off time interval. The determining the screen off time interval may comprise determining the screen off time interval for the application based on the fourth value and a minimum value for the screen off time interval.

For example, the method may comprise identifying a bright time interval for changing the default brightness of the screen for the application to a lower brightness than the default brightness, based on the determined screen off time interval. The method may comprise identifying, based on the determined screen off time interval, a dim time interval for changing the screen for the application displayed, based on a lower brightness than the default brightness, to the screen off.

For example, the method may comprise changing the default brightness of the screen for the application to a lower brightness than the default brightness, in accordance with an identification that a user input is not obtained during a bright time interval. The method may comprise changing the screen for the application displayed based on a lower brightness than the default brightness, in accordance with an identification that a user input is not obtained during a dim time interval, to the screen off.

For example, the method may comprise increasing a count value for the application in response to a user input obtained while displaying the screen for the application based on a lower brightness than the default brightness.

For example, the determining the screen off time interval may comprise determining the screen off time interval based on an identification that the average usage time interval for the application is greater than the minimum value for the screen off time interval.

For example, the method may comprise displaying a user interface (UI), through the display, for configuring the screen off time interval for a plurality of applications including the application.

As described above, an electronic device may comprise a display. The electronic device may comprise memory, including one or more storage media, storing instructions. The electronic device may comprise at least one processor including processing circuitry. The instructions, when executed by the at least one processor individually or collectively, may cause the electronic device to, based on the number of one or more executions of an application and a total execution time of the application in a foreground state, identify a calculated execution time of the application. The instructions, when executed by the at least one processor individually or collectively, may cause the electronic device to identify the number of one or more user inputs obtained while an execution screen of the application is displayed in a dim state. The instructions, when executed by the at least one processor individually or collectively, may cause the electronic device to determine a screen off time interval for the application based on the calculated execution time of the application and the number of the one or more user inputs obtained while the execution screen of the application is displayed in the dim state. The instructions, when executed by the at least one processor individually or collectively, may cause the electronic device to perform an operation for reducing power consumption of the electronic device based on the screen off time interval while the application is executed in the foreground state after determining the screen off time interval.

For example, the instructions, when executed by the at least one processor individually or collectively, may cause the electronic device to identify an activation time of a function causing the execution screen for the application to display based on a first luminance. The instructions, when executed by the at least one processor individually or collectively, may cause the electronic device to identify an average usage time for the application based on excluding the activation time from the total execution time of the application. The instructions, when executed by the at least one processor individually or collectively, may cause the electronic device to determine the screen off time interval based on the average usage time and the number of the one or more user inputs obtained while the execution screen of the application is displayed in the dim state.

For example, the instructions, when executed by the at least one processor individually or collectively, may cause the electronic device to identify a first time interval for changing brightness of the execution screen of the application from a first luminance of a default state to a second luminance of the dim state lower than the first luminance, wherein the first time interval is identified based on the screen off time interval. The instructions, when executed by the at least one processor individually or collectively, may cause the electronic device to perform the operation for reducing the power consumption of the electronic device by displaying the execution screen of the application based on the second luminance in accordance with an identification that a user input for the execution screen of the application displayed based on the first luminance is not obtained during the first time interval.

For example, the instructions, when executed by the at least one processor individually or collectively, may cause the electronic device to identify a second time interval for turning off the execution screen of the application displayed based on a second luminance of the dim state lower than a first luminance of a default state, wherein the second time interval is identified based on the screen off time interval. The instructions, when executed by the at least one processor individually or collectively, may cause the electronic device to perform the operation for reducing the power consumption of the electronic device by turning off the execution screen of the application in accordance with an identification that a user input for the execution screen of the application displayed based on the second luminance is not obtained during the second time interval.

For example, the instructions, when executed by the at least one processor individually or collectively, may cause the electronic device to identify the calculated execution time by identifying an average execution time for the application based on the number of the one or more executions for the application and the total execution time of the application in the foreground state.

For example, the instructions, when executed by the at least one processor individually or collectively, may cause the electronic device to identify a first value based on the calculated execution time for the application and a first weight. The instructions, when executed by the at least one processor individually or collectively, may cause the electronic device to identify a second value based on the number of the one or more user inputs obtained while the execution screen of the application is displayed in the dim state, the second time interval for turning off the execution screen of the application displayed in the dim state, and a second weight. The instructions, when executed by the at least one processor individually or collectively, may cause the electronic device to determine the screen off time interval based on a summation of the first value and the second value, a maximum value configured for the screen off time interval, and a minimum value configured for the screen off time interval.

For example, the instructions, when executed by the at least one processor individually or collectively, may cause the electronic device to identify whether an average usage time for the application identified based on excluding an activation time of a function causing the execution screen of the application to display based on a first luminance from the total execution time of the application is less than a minimum value configured for the screen off time interval. The instructions, when executed by the at least one processor individually or collectively, may cause the electronic device to refrain from determining the screen off time interval in accordance with an identification that the average usage time for the application is less than the minimum value configured for the screen off time interval. The instructions, when executed by the at least one processor individually or collectively, may cause the electronic device to determine the screen off time interval in accordance with an identification that the average usage time for the application is greater than or equal to the minimum value configured for the screen off time interval.

For example, the electronic device may further comprise at least one camera. The screen off time interval may be determined further based on a time when a gaze of the user identified based on the at least one camera is located on the execution screen of the application executed in the foreground state.

For example, the execution screen of the application may be displayed with a first luminance in a default state. The execution screen of the application may be displayed with a second luminance in the dim state and the second luminance may be lower than the first luminance.

For example, the instructions, when executed by the at least one processor individually or collectively, may cause the electronic device to display user interfaces (UIs) for providing a configuration for the screen off time interval of the application. The UIs may include a UI for obtaining a user input for configuring a value for the screen off time interval and a UI for determining the screen off time interval based on the calculated execution time and the number of the one or more user inputs.

As described above, a method performed by an electronic device comprising a display and at least one camera may comprise, based on the number of one or more executions of an application and a total execution time of the application in a foreground state, identifying a calculated execution time of the application. The method may comprise identifying the number of one or more user inputs obtained while an execution screen of the application is displayed in a dim state. The method may comprise determining a screen off time interval for the application based on the calculated execution time of the application and the number of the one or more user inputs obtained while the execution screen of the application is displayed in the dim state. The method may comprise performing an operation for reducing power consumption of the electronic device based on the screen off time interval while the application is executed in the foreground state after determining the screen off time interval.

For example, the determining the screen off time interval may comprise identifying an activation time of a function causing the execution screen for the application to display based on a first luminance, identifying an average usage time for the application based on excluding the activation time from the total execution time of the application, and determining the screen off time interval based on the average usage time and the number of the one or more user inputs obtained while the execution screen of the application is displayed in the dim state.

For example, the performing the operation for reducing the power consumption of the electronic device may comprise identifying a first time interval for changing brightness of the execution screen of the application from a first luminance of a default state to a second luminance of the dim state lower than the first luminance, wherein the first time interval is identified based on the screen off time interval, and performing the operation for reducing the power consumption of the electronic device by displaying the execution screen of the application based on the second luminance in accordance with an identification that a user input for the execution screen of the application displayed based on the first luminance is not obtained during the first time interval.

For example, the performing the operation for reducing the power consumption of the electronic device may comprise identifying a second time interval for turning off the execution screen of the application displayed based on a second luminance of the dim state lower than a first luminance of a default state, wherein the second time interval is identified based on the screen off time interval, and performing the operation for reducing the power consumption of the electronic device by turning off the execution screen of the application in accordance with an identification that a user input for the execution screen of the application displayed based on the second luminance is not obtained during the second time interval.

For example, the identifying the calculated execution time may comprise identifying the calculated execution time by identifying an average execution time for the application based on the number of the one or more executions for the application and the total execution time of the application in the foreground state.

For example, the determining the screen off time interval may comprise identifying a first value based on the calculated execution time for the application and a first weight, identifying a second value based on the number of the one or more user inputs obtained while the execution screen of the application is displayed in the dim state, the second time interval for turning off the execution screen of the application displayed in the dim state, and a second weight, and determining the screen off time interval based on a summation of the first value and the second value, a maximum value configured for the screen off time interval, and a minimum value configured for the screen off time interval.

For example, the determining the screen off time interval may comprise identifying whether an average usage time for the application identified based on excluding an activation time of a function causing the execution screen of the application to display based on a first luminance from the total execution time of the application is less than a minimum value configured for the screen off time interval, refraining from determining the screen off time interval in accordance with an identification that the average usage time for the application is less than the minimum value configured for the screen off time interval, and determining the screen off time interval in accordance with an identification that the average usage time for the application is greater than or equal to the minimum value configured for the screen off time interval.

For example, the screen off time interval may be determined further based on a time when a gaze of the user identified based on the at least one camera is located on the execution screen of the application executed in the foreground state.

For example, the execution screen of the application may be displayed with a first luminance in a default state. The execution screen of the application may be displayed with a second luminance in the dim state and the second luminance may be lower than the first luminance.

As described above, as a non-transitory computer readable storage medium storing one or more programs, the one or more programs may comprise instructions which, when executed by at least one processor of an electronic device individually or collectively, cause the electronic device to, based on the number of one or more executions of an application and a total execution time of the application in a foreground state, identify a calculated execution time of the application. The one or more programs may comprise instructions which, when executed by at least one processor of an electronic device individually or collectively, cause the electronic device to identify the number of one or more user inputs obtained while an execution screen of the application is displayed in a dim state. The one or more programs may comprise instructions which, when executed by at least one processor of an electronic device individually or collectively, cause the electronic device to determine a screen off time interval for the application based on the calculated execution time of the application and the number of the one or more user inputs obtained while the execution screen of the application is displayed in the dim state. The one or more programs may comprise instructions which, when executed by at least one processor of an electronic device individually or collectively, cause the electronic device to perform an operation for reducing power consumption of the electronic device based on the screen off time interval while the application is executed in the foreground state after determining the screen off time interval.

The effects that may be obtained from the present disclosure are not limited to those described above, and any other effects not mentioned herein will be clearly understood by those having ordinary knowledge in the art to which the present disclosure belongs.

For one or more embodiments, at least one of the components described in one or more of the preceding figures may be configured to perform one or more operations, techniques, processes, and/or methods as described in this disclosure. For example, a processor (e.g., a baseband processor) described in this disclosure in relation to one or more of the preceding figures may be configured to operate according to one or more examples described in this disclosure. As another example, circuitry associated with a user equipment (UE), base station, network element, etc., as described above in relation to one or more of the previous figures, may be configured to operate according to one or more examples described herein.

Any of the embodiments described above may be combined with any other embodiment (or combination of embodiments) unless explicitly stated otherwise. The foregoing description of one or more implementations provides examples and descriptions, but is not intended to limit or exhaust the scope of the embodiments in the exact form disclosed. Modifications and variations are possible or may be obtained from the practice of various embodiments in light of the above teachings.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device, comprising:
a display;
memory, including one or more storage media, storing instructions; and
at least one processor including processing circuitry,
wherein the instructions, when executed by the at least one processor individually or collectively, cause the electronic device to:
based on the number of one or more executions of an application and a total execution time of the application in a foreground state, identify a calculated execution time of the application,
identify the number of one or more user inputs obtained while an execution screen of the application is displayed in a dim state,
determine a screen off time interval for the application based on the calculated execution time of the application and the number of the one or more user inputs obtained while the execution screen of the application is displayed in the dim state, and
perform an operation for reducing a power consumption of the electronic device based on the screen off time interval while the application is executed in the foreground state after determining the screen off time interval.

2. The electronic device of claim 1,
wherein the instructions, when executed by the at least one processor individually or collectively, cause the electronic device to:
identify an average activation time of a function causing the execution screen to display based on a first luminance without a user input,
identify an average usage time of the application based on excluding the average activation time from the calculated execution time of the application, and
determine the screen off time interval based on the average usage time and the number of the one or more user inputs.

3. The electronic device of claim 1,
wherein the instructions, when executed by the at least one processor individually or collectively, cause the electronic device to:
identify a first time interval for changing a brightness of the execution screen of the application from a first luminance of a default state to a second luminance of the dim state lower than the first luminance, wherein the first time interval is identified based on the screen off time interval, and
perform the operation for reducing the power consumption of the electronic device by displaying the execution screen of the application based on the second luminance in accordance with an identification that a user input for the execution screen of the application displayed based on the first luminance is not obtained during the first time interval.

4. The electronic device of claim 1,
wherein the instructions, when executed by the at least one processor individually or collectively, cause the electronic device to:
identify a second time interval for turning off the execution screen of the application displayed based on a second luminance of the dim state lower than a first luminance of a default state, wherein the second time interval is identified based on the screen off time interval, and
perform the operation for reducing the power consumption of the electronic device by turning off the execution screen of the application in accordance with an identification that a user input for the execution screen of the application displayed based on the second luminance is not obtained during the second time interval.

5. The electronic device of claim 1,
wherein the instructions, when executed by the at least one processor individually or collectively, cause the electronic device to:
identify the calculated execution time by identifying an average execution time for the application based on the number of the one or more executions for the application and the total execution time of the application in the foreground state.

6. The electronic device of claim 1,
wherein the instructions, when executed by the at least one processor individually or collectively, cause the electronic device to:
identify a first value based on the calculated execution time for the application and a first weight,
identify a second value based on the number of the one or more user inputs obtained while the execution screen of the application is displayed in the dim state, the second time interval for turning off the execution screen of the application displayed in the dim state, and a second weight, and
determine the screen off time interval based on a summation of the first value and the second value, a maximum value configured for the screen off time interval, and a minimum value configured for the screen off time interval.

7. The electronic device of claim 1,
wherein the instructions, when executed by the at least one processor individually or collectively, cause the electronic device to:
identify whether an average usage time for the application identified based on excluding an activation time of a function causing the execution screen of the application to display based on a first luminance from the total execution time of the application is less than a minimum value configured for the screen off time interval,
refrain from determining the screen off time interval in accordance with an identification that the average usage time for the application is less than the minimum value configured for the screen off time interval, and
determine the screen off time interval in accordance with an identification that the average usage time for the application is greater than or equal to the minimum value configured for the screen off time interval.

8. The electronic device of claim 1, further comprising:
at least one camera, and
wherein the screen off time interval is determined further based on a time when a gaze of the user identified based on the at least one camera is located on the execution screen of the application executed in the foreground state.

9. The electronic device of claim 1,
wherein the execution screen of the application is displayed with a first luminance in a default state,
wherein the execution screen of the application is displayed with a second luminance in the dim state, and
wherein the second luminance is lower than the first luminance.

10. The electronic device of claim 1,
wherein the instructions, when executed by the at least one processor individually or collectively, cause the electronic device to:
display user interfaces (UIs) for providing a configuration for the screen off time interval of the application,
wherein the UIs include a UI for obtaining a user input for configuring a value for the screen off time interval and a UI for determining the screen off time interval based on the calculated execution time and the number of the one or more user inputs.

11. A method performed by an electronic device comprising a display and at least one camera, comprising:
based on the number of one or more executions of an application and total execution time of the application in a foreground state, identifying a calculated execution time of the application,
identifying the number of one or more user inputs obtained while an execution screen of the application is displayed in a dim state,
determining a screen off time interval for the application based on the calculated execution time of the application and the number of the one or more user inputs obtained while the execution screen of the application is displayed in the dim state, and
performing an operation for reducing a power consumption of the electronic device based on the screen off time interval while the application is executed in the foreground state after determining the screen off time interval.

12. The method of claim 11, wherein the determining the screen off time interval comprises:
identifying an average activation time of a function causing the execution screen to display based on a first luminance without a user input,
identifying an average usage time of the application based on excluding the average activation time from the calculated execution time of the application, and
determining the screen off time interval based on the average usage time and the number of one or more user inputs.

13. The method of claim 11, wherein the performing the operation for reducing the power consumption comprises:
identifying a first time interval for changing a brightness of the execution screen of the application from a first luminance of a default state to a second luminance of the dim state lower than the first luminance, wherein the first time interval is identified based on the screen off time interval, and
performing the operation for reducing the power consumption of the electronic device by displaying the execution screen of the application based on the second luminance in accordance with an identification that a user input for the execution screen of the application displayed based on the first luminance is not obtained during the first time interval.

14. The method of claim 11, wherein the performing the operation for reducing the power consumption of the electronic device comprises:
identifying a second time interval for turning off the execution screen of the application displayed based on a second luminance of the dim state lower than a first luminance of a default state, wherein the second time interval is identified based on the screen off time interval, and
performing the operation for reducing the power consumption of the electronic device by turning off the execution screen of the application in accordance with an identification that a user input for the execution screen of the application displayed based on the second luminance is not obtained during the second time interval.

15. The method of claim 11, wherein the identifying the calculated execution time comprises:
identifying the calculated execution time by identifying an average execution time for the application based on the number of the one or more executions for the application and the total execution time of the application in the foreground state.
